# EUROPEAN PATENT APPLICATION

(11) **EP 2 481 636 A1**
(43) Date of publication of application: **01.08.2012**
(21) Application number: 11152568.9
(22) Date of filing: 28.01.2011
(51) Int. Cl.: B60R 1/00

(54) **Parking assistance system and method**

(71) Applicant: NXP B.V., 5656 AG Eindhoven (NL)
(72) Inventor: Thomas, Bijo, 5656 AE, Eindhoven (NL)
(74) Representative: Schouten, Marcus Maria

(57) **Abstract**

A vehicle parking assistance system comprises an image processing unit which combines multiple images which comprise views in different directions around the vehicle to form a bird's eye view. An image representing the vehicle is superimposed into the bird's eye view.

The position of the image representing the vehicle on the display and the displayed view of the vehicle's surroundings is controlled in response to user commands and/or vehicle sensor data.

## Description

This invention relates to parking assistance systems.

The invention relates in particular to parking assistance systems that present a bird's eye view (overhead view) to the driver of the car and its surroundings. A bird's eye view image is an effective aid when parking and in slow driving scenarios.

In such systems, images of the vehicle's surroundings are captured using multiple cameras mounted on the car, and the captured images are processed using image transformation techniques. The transformed images are joined together to form the bird's eye view image of the car and the surroundings, and this image is displayed.

Methods for processing multiple camera images of the vehicle surroundings for display to the driver are well known, for example from the article "Wrap-around view system for motor vehicles" of Shimizu Seiya, Kawai Jun and Yamada Hirozi, published in Fujitsu Sci. Tech. J., Vol. 46, No. 1, pp95-102, as well as from various patent applications such as US7684593 and US7734417.

The captured images of the multiple cameras are transformed using coordinate transformations to a viewing point above the vehicle based on ground projection. A computer generated vehicle overlay image is superimposed onto this projected image.

A bird's eye view (around view) system typically consists of fish eye (wide angle) cameras mounted on the periphery of the vehicle (e.g. four cameras mounted on the front, right, rear and left sides of the car). These camera images need to be corrected for fish eye distortion. The distortion-corrected images need to be transformed and projected in such a way that the observation point is above the vehicle. The projected images need to be stitched together in such a way that a seamless view of the surroundings of the vehicle is obtained. This around view is further processed to improve the picture quality and displayed in the cabin of the driver to assist the driver.

Some of the known approaches of bird's eye view based parking assistance systems support views from one of the cameras alongside the bird's eye view. US7734417 discloses a scheme in which the driver can select to view either the bird's eye view or the view from a particular camera. The overhead projection scheme described in US7684593 discloses a bird's eye view scheme in which the position of the joint of the transformed images can be configured either by the driver or based on the dynamic state of the vehicle.

Existing bird's eye view systems provide the overhead view, provisions for an additional view such as a view from a single camera and also selection of view based on either the driver's selection or based on the dynamic state of the vehicle.

The known systems do provide good assistance to the driver to get an overview of the surroundings of the vehicle. However these schemes do not offer a natural view to the driver. It can be confusing for the driver to look at multiple views and take the driving decisions. For example, when the driver wants to take a left turn either the view from the left camera or front camera need to be selected by the driver (or dynamically by a control system) to get a wider view of the front-left area. Hence the driver needs to look at the bird's eye view, bird's eye view and an additional view, or the additional view alone. This can be confusing and is difficult to interpret for the driver as such views do not offer a natural view of the relevant area.

According to the invention, there is provided a vehicle parking assistance system, comprising:
an image processing unit, adapted to:
   process multiple images which comprise views in different directions around the vehicle;
   combine the multiple images to form a bird's eye view; and
   superimpose an image representing the vehicle into the bird's eye view;
a control unit for receiving user commands and/or vehicle sensor data; and a display,
   wherein the image processing unit is adapted to control the position of the image representing the vehicle on the display in response to the user commands and/or vehicle sensor data thereby to control the displayed area of the surroundings of the vehicle.

This system adapts the position of the vehicle on the screen, and thereby the part of the vehicle surroundings which is displayed on the remainder of the screen. By controlling the position of the vehicle image, the displayed areas of the surroundings of the vehicle are changed, for example in such a way that a wider area of the region of interest is displayed in response to the user commands and/or vehicle sensor data.

The bird's eye view can be configured dynamically based on the state of the vehicle. The view configuration can be carried out in such a way the there is minimal driver intervention and the selected view is informative and simple enough so that the driver obtains a simple overview of the area of interest of the surroundings in a more natural view.

The display area is utilized in such a way that a wider view of the area of interest is displayed dynamically which maximizes the driving assistance for a particular driving state of the vehicle.

Adaptation of the bird's eye view to the desired view covering the region of interest can instead be triggered explicitly by the driver.

By viewing only a portion of the area surrounding the vehicle, the signal processing operations can be carried out only for the region of interest thereby reducing the computing overhead.

The invention thus provides a system in which the views are less confusing and easier to interpret for the driver. The area of the display allocated to the region of interest can be maximized so that the driver can get a wider and detailed view of the region of interest.

The system preferably further comprises a set of cameras for generating the multiple images.

The control unit can be for receiving vehicle sensor data comprising one or more of:
steering wheel position;
vehicle gear;
speed of movement; and
distance to remote object.

The corresponding sensor information can be used to determine how the driver is parking and the parts of the vehicle that need to be viewed closely to avoid collision.

The control unit can also be for receiving a user command comprising an indication of a region of the area around the vehicle which is of interest to the user. Thus, the user can choose to view a particular area of the surroundings in more detail or more widely.

The image processing unit can be adapted to position the image representing the vehicle at an edge of the display in response to the user commands and/or vehicle sensor data such that the display area is for only a portion of the area around the vehicle. In this way a wider area of the region of interest can be displayed on the display device.

The image processing unit can further be adapted to perform a zoom function in response to the user commands and/or vehicle sensor data. In this way, only the relevant part of the vehicle surrounding is displayed, but it can also be displayed with a zoom-in function so that the relevant area can be seen more clearly.

The zoom function can depend on the distance to a remote object, so that the zoom function takes place as the driver gets closer to the remote object (e.g. another vehicle next to which the driver is parking).

The control unit can be for receiving both user commands and vehicle sensor data, and can be adapted to give preference to user commands.

The invention also provides a method of controlling a vehicle parking assistance system, comprising:
processing multiple images which comprise views in different directions around the vehicle;
combining the multiple images to form a bird's eye view;
superimposing an image representing the vehicle into the bird's eye view;
receiving user commands and/or vehicle sensor data; and
controlling the position of the image representing the vehicle on a display in response to the user commands and/or vehicle sensor data thereby to control the displayed area of the surroundings of the vehicle.

This method can be implemented by a computer program.

Examples of the invention will now be described in detail with reference to the accompanying drawings, in which:
Figure 1 shows a known parking assistance system;
Figure 2 shows the bird's eye view generated by the system of Figure 1;
Figure 3 shows the views generated another known system;
Figure 4 shows a first example of the bird's eye view generated by the system of the invention;
Figure 5 shows three further examples of the bird's eye view generated by the system of the invention;
Figure 6 shows another example of the bird's eye view generated by the system of the invention;
Figure 7 shows an example of the system of the invention; and
Figure 8 shows an example of the control method of the invention.

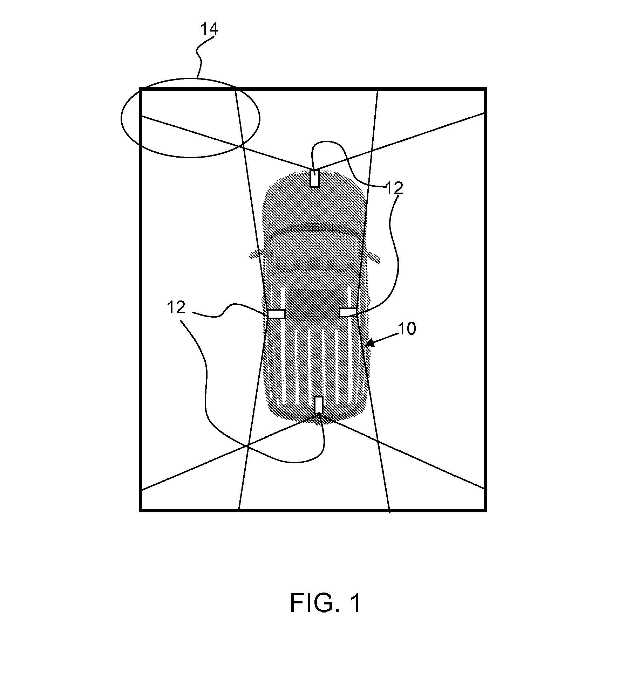

Figure 1 shows a typical bird's eye view system. The vehicle is shown as 10 and four cameras 12 are mounted on the vehicle, at the front and rear and at each side.

The basic principle is that the fields of view (FOVs) of the four cameras need to connect. The area surrounding the vehicle has to be entirely covered by the fields of view within a certain distance (for example two meters) of the car. This means that the FOVs of any adjacent cameras need to overlap significantly. The overlap for the front and left side cameras is shown as 14.

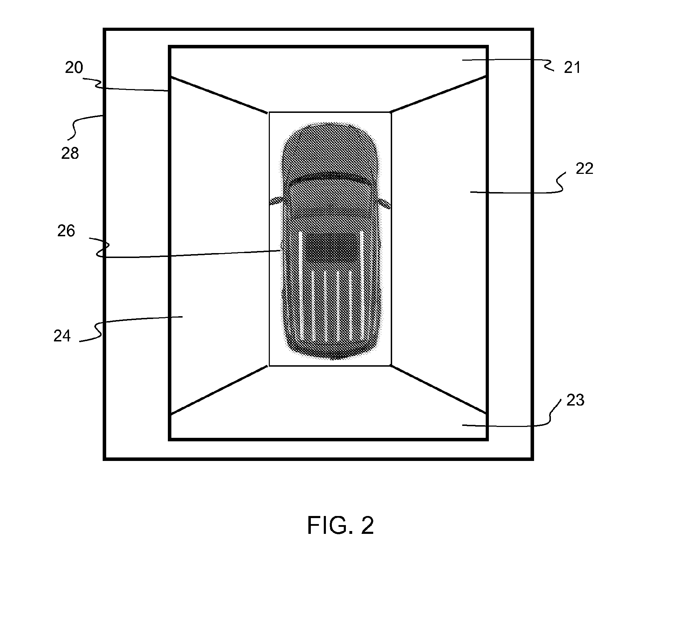

The images of all four views are processed in real-time and are displayed as a bird's eye view in a display system as shown in Figure 2.

The bird's eye view is indicated as 20. The front, right, rear and left views are indicated as 21,22,23,24. The graphical overlay 26 of the car is in the centre of the display screen 28.

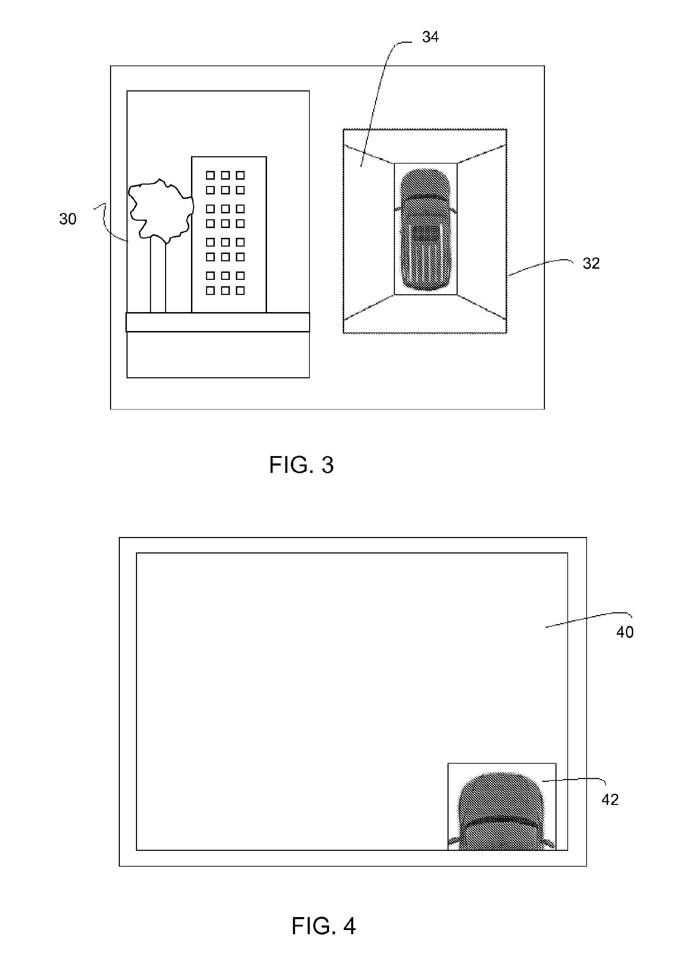

Some bird's eye view systems offer additional features such as selection of a desired view, e.g. front, right, rear or left view. This offers the driver a wider view of a specific area. This can be displayed alone or in addition to the bird's eye view 32 as shown in Figure 3.

In Figure 3, there is an additional side view 30. The bird's eye view is shown as 32. The side view 30 is in fact a wider view of one of the sides of the car. In this case, it is shown as a wider view of the left side of the car. The left side of the car in the bird's eye view is marked as 34.

A problem with such views is that the driver needs to look at either a wider side view or else a wider side view in combination with a bird's eye view (as in Figure 3). This can be confusing to the driver as the interpretation of the surroundings becomes complex. For example, the actual position of the car in the side view 30 is not clear. Also, since this view corresponds to a particular camera output view, it may not cover the area of interest. For example while the car is taking a left turn, the driver needs to have a view of the front view and left view. Adding another view on the display could be even more confusing.

The invention provides a system in which the area of interest corresponding to a particular vehicle state (e.g. while taking left turn) is shown by configuring the bird's eye view itself and without the use of additional views. The configuration of the bird's eye view is carried out according to the state of the vehicle or it can be selected explicitly by the driver.

An example corresponding to the state when the car is taking a left turn is provided in Figure 4. The bird's eye view is indicated as 40 and the car overlay part displayed is indicated as 42. Since this is the bird's eye view which shows part of the front view and part of the side view in a combined view, it is easier for the driver to correlate the vehicle position and its surroundings. This view appears less synthetic to the driver and hence is closer to the natural view of the surroundings the driver would have directly though his eyes.

This bird's eye view of Figure 4 gives a clear view of the area of interest without any confusion to the driver. Also, since there is only one view in the display, the maximum area of interest of the car surroundings can be displayed on the display screen. For example, instead of showing 2 meters around the car around in all four sides, 4 meters to the left and 4 meters to the front can be displayed to get a wider view of the area of interest of the surroundings. In this case the area of interest is the front and left area around the car. Alternatively, a zoom-in function can be implemented to get a more detailed close-up view. A wider area view or else a more detailed close up view is therefore available to the driver which helps in taking better driving decisions.

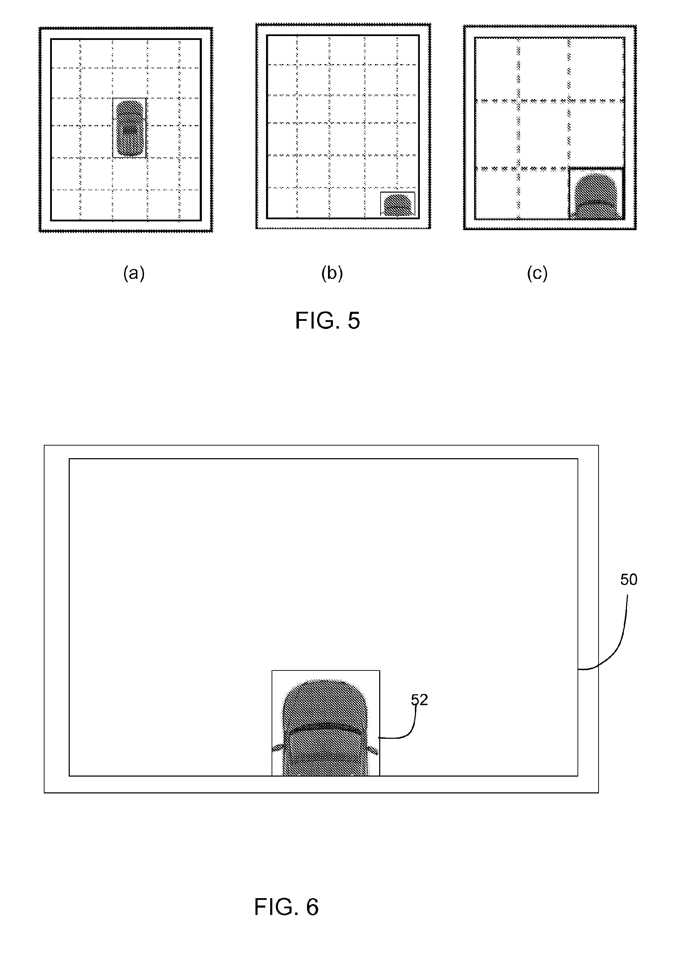

The bird view examples of Figure 5, give the bird view without any adaptation (Fig. 5a), the bird-view adapted to give a wider view of the region of interest (Fig. 5b), and the bird view adapted to give a zoom-in view of the area of interest of the surroundings (Fig. 5c). Grid lines are shown in the figure for giving a measure of the actual distance around the car which is displayed on the bird view display device. These grid lines may be displayed all the time, or only when the display is configured to give a modified display, since this is when the driver is likely to be paying particular attention to the screen for assistance.

Assuming that the bird view output shown in the display is calibrated such that a view of 2 meters around the car on all sides is displayed, this means that in Fig. 5a the distance between grid lines corresponds to 1 meter. As seen in the view of Fig. 5b, the adapted bird view provides a view of approximately 5 m towards the front and approx 3.5 meters towards the left of the car. This is therefore a wider view of the area of the surroundings of interest.

The calibration of the images of both Fig. 5a and 5b is the same, such that the total area displayed on the display device is the same, 5 meters x 6 meters in this example. Hence by adapting the bird view, a wider area of the region of interest can be shown to the driver/user, which assists in the driving.

The bird view shown in Fig. 5c corresponds to a zoom-in view of only the front and left area. This gives a detailed view of the same distance around the vehicle as in Fig. 5a (2 meters), but a more detailed one, only of the region of interest (front and left areas).

Other scenarios can be imagined for various states of the vehicle such as taking a right turn, moving forward, reverse movement etc.

For example, when the vehicle is moving forward, the driver would be interested in watching the front and side areas and not the rear areas of the car. In this case the bird's eye view can be configured as shown in Figure 6. As shown, the bird's eye view 50 is configured in such a way the only the front, left and right areas are displayed. The car overlay 52 is in the centre of the bottom edge of the display area.

The configurations of the bird's eye view display can be triggered with or without driver intervention.

If no driver intervention is required, the configuration can be implemented by a control system which monitors the vehicle state. Examples of vehicle state parameters are:
direction of movement,
speed of car,
gear of the vehicle (e.g. drive/reverse),
distance to a remote object.

The identification of a state is carried out by sensors mounted on the car, and such sensors are well known for other control and monitoring purposes. Thus, existing sensors can be used to provide information to the parking assistance system. The direction of the vehicle can for example be identified using steering angle sensors.

The system can be combined with conventional distance sensors, such as ultrasound sensors, which can also provide an audio warning signal in conventional manner, but additionally interface with the display control system, for example by controlling a zoom command. Furthermore, by knowing which distance sensor has the closest remote object, this provides another input for the automatic control of the display configuration.

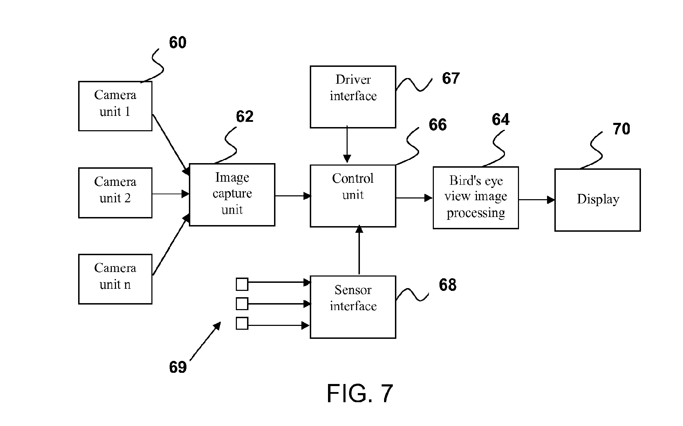

A functional block diagram for the bird's eye view system according to the invention is shown in Figure 7.

Images output by the camera units 60 are captured using the image capture unit 62. The images are processed to create a bird's eye view in the bird's eye view image processing unit 64. Adaptive configurations of the bird's eye view are controlled by the control unit 66.

The inputs for the adaptive configuration are provided by a driver interface unit 67 and a sensor interface unit 68.

The driver interface unit 67 captures and processes control inputs by the driver such as commands to change to a particular view. The driver could provide such inputs by using either remote controls or using touch screen display units.

The sensor interface 68 provides information such as steering angle, vehicle speed, gear position. This information is received from vehicle sensors 69. The configured bird's eye view output is displayed on the display unit 70.

Since the bird's eye view generation is controlled by the control unit 66, only the required bird's eye view is generated. This could also reduce the processing load on the processor on which the processing will be implemented. In particular, some of the camera outputs do not need to be processed in some use cases. For example in Figure 4, only the front and left camera data need to be processed. There is no need to process the data of right and rear, since this information is not displayed.

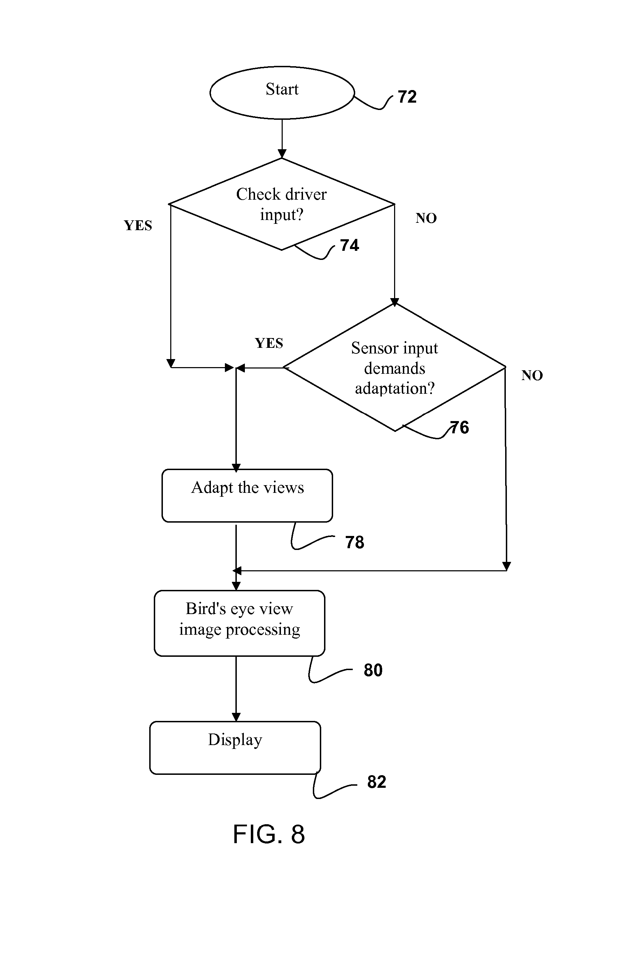

A flow chart of the operation of the control unit according to an embodiment of the invention is provided in Figure 8.

The process starts in step 72. In step 74, the control logic checks for any driver input for adapting the bird's eye view. If there is a driver input command, the views are adapted as per the request, in step 78.

If there is no input from the driver, the sensor input is checked at step 76 to identify the state of the various vehicle parameters which are being monitored. The sensor input then triggers the view adaptation of step 78.

If the sensor input indicates that view adaptation is not needed, then the adaptation step 78 is bypassed, and the standard central bird's eye view is processed.

Based on the modified or unmodified views, the bird's eye view is generated at step 80 and is displayed in step 82.

The control logic can be modified to enable or disable the sensor input stage and the driver input stage.

The invention can be used as part of a driving assistance aid, for example for parking assistance systems for vehicles.

The method of the invention can be implemented as software in a programmable processor or in hardware as an ASIC, as a modification to the existing image processing algorithm. Indeed, the image processing, user command processing, sensor signal processing can be carried out by the same processor in case of the software implementation. The computer program may be stored/distributed on a suitable medium, such as an optical storage medium or a solid-state medium supplied together with or as part of other hardware, but may also be distributed in other forms, such as via the Internet or other wired or wireless telecommunication systems.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A vehicle parking assistance system, comprising:
an image processing unit (64), adapted to:
process multiple images which comprise views in different directions around the vehicle;
combine the multiple images to form a bird's eye view; and
superimpose an image (26) representing the vehicle into the bird's eye view (20);
a control unit (66) for receiving user commands and/or vehicle sensor data; and
a display (70),
wherein the image processing unit (64) is adapted to control the position of the image (26) representing the vehicle on the display in response to the user commands and/or vehicle sensor data thereby to control the displayed area of the surroundings of the vehicle.

2. A system as claimed in claim 1, further comprising a set of cameras (60) for generating the multiple images.

3. A system as claimed in any preceding claim, wherein the control unit (66) is for receiving vehicle sensor data comprising one or more of:
steering wheel position;
vehicle gear;
speed of movement; and
distance to remote object.

4. A system as claimed in any preceding claim, wherein the control unit is for receiving a user command comprising an indication of a region of the area around the vehicle which is of interest to the user.

5. A system as claimed in any preceding claim, wherein the image processing unit (64) is adapted to position of the image representing the vehicle at an edge of the display in response to the user commands and/or vehicle sensor data such that the display area is for only a portion of the area around the vehicle.

6. A system as claimed in any preceding claim, wherein the image processing unit (64) is adapted to generate a view corresponding to a wider area of the region of interest to the user in response to the user commands and/or vehicle sensor data.

7. A system as claimed in any preceding claim, wherein the image processing unit (64) is adapted to perform a zoom function in response to the user commands and/or vehicle sensor data to provide a more detailed view of the displayed area of the surroundings of the vehicle

8. A system as claimed in any preceding claim, wherein the control unit (66) is for receiving both user commands and vehicle sensor data and is adapted to give preference to user commands.

9. A method of controlling a vehicle parking assistance system, comprising:
processing multiple images which comprise views in different directions around the vehicle;
combining the multiple images to form a bird's eye view (20);
superimposing an image (26) representing the vehicle into the bird's eye view;
receiving user commands and/or vehicle sensor data; and
controlling the position of the image representing the vehicle on a display in response to the user commands and/or vehicle sensor data, thereby to control the displayed area of the surroundings of the vehicle.

10. A method as claimed in claim 9, further comprising generating the multiple images using a set of cameras (60).

11. A method as claimed in claim 9 or 10, comprising receiving vehicle sensor data comprising one or more of:
steering wheel position;
vehicle gear;
speed of movement; and
distance to remote object.

12. A method as claimed in any one of claims 9 to 11, comprising receiving a user command comprising an indication of a region of the area around the vehicle which is of interest to the user.

13. A method as claimed in any one of claims 9 to 12, comprising positioning the image representing the vehicle at an edge of the display in response to the user commands and/or vehicle sensor data such that the display area is for only a portion of the area around the vehicle,
wherein the portion of the area is displayed to show a wider view of the region of interest of the area around the vehicle or is displayed with a zoom function to give a more detailed view of the region of interest of the area around the vehicle.

14. A method as claimed in any one of claims 9 to 13, comprising receiving both user commands and vehicle sensor data and giving preference to user commands.

15. A computer program comprising code means adapted to perform the steps of any one of claims 9 to 14 when said program is run on a computer.
